# EUROPÄISCHE PATENTSCHRIFT

(11) **EP 0 949 746 B1**
(45) Veröffentlichungstag und Bekanntmachung des Hinweises auf die Patenterteilung: **11.08.2004**
(21) Anmeldenummer: 99106517.8
(22) Anmeldetag: 30.03.1999
(51) Int. Cl.: H02K 15/06

(54) **Vorrichtung zur Herstellung von Spulenwicklungen in Statorblechpaketen**
Apparatus for producing coil windings into stator laminated cores
Dispositif pour fabriquer des enroulements dans des empilages de tôles statoriques

(30) Priorität: 06.04.1998 DE 19815088
(43) Veröffentlichungstag der Anmeldung: 13.10.1999
(73) Patentinhaber: Rist, Otto, 88255 Baienfurt (DE)
(72) Erfinder: Rist, Otto, 88255 Baienfurt (DE); Wessle, Anton, 88284 Mochenwangen (DE)
(74) Vertreter: Patentanwälte Eisele, Otten & Roth

(56) Entgegenhaltungen:
- US-A- 4 106 189
- US-A- 4 265 012
- US-A- 4 679 312

## Beschreibung

Bislang werden die Spulenwicklungen in Statorblechpaketen in verschiedenen Arbeitsschritten auf verschiedenen Bearbeitungsstationen eingebracht, wobei das Statorblechpaket von Bearbeitungsstation zu Bearbeitungsstation übergeben wird. Diese Übergabe wird manuell durchgeführt und anschließend der nächste Bearbeitungsschritt gestartet.

Auf einer ersten Bearbeitungsstation werden hierbei die einzelnen Spulen in ein sogenanntes Einziehwerkzeug gewickelt, das anschließend von der Wickelstation zu einer Einzugsstation verbracht wird. Hierbei wird manuell auf das so vorbereitete, mit Spulen versehene Einziehwerkzeug ein Deckel aufgesetzt, der die einzelnen Lamellen des Einziehwerkzeugs sowohl in radialer Richtung fixiert als auch die exakte Teilung der einzelnen Lamellen entlang dem Umfang des Einzugswerkzeugs festlegt. Während des anschließenden Einziehvorgangs der Spulen in die Nuten eines Statorblechpakets wird hierdurch eine exakte Positionierung der Lamellen bzw. der entsprechenden Spulen vor den jeweiligen Nuten des Statorblechpakets gewährleistet.

Anschließend wird das Stator-Blechpaket mit eingezogenen Spulen an eine separate Formstation gebracht, wo die Spulenenden in eine gewünschte, leicht nach außen gespreizte Form gedrückt werden.

Aus dem Stand der Technik gehen dazu die US 4,265,012 und die US 4,106,189 hervor. Die US 4,265,012 beschreibt eine Einziehvorrichtung für Spulen in Stator-Blechpakete. In dieser Vorrichtung werden in mittels eines Förderbandes automatisch zugeführte Stator-Blechpakete vorgefertigte Spulen eingezogen. Es handelt sich hierbei also um eine Ausführungsform einer eingangs beschriebenen Bearbeitungsstation für die Herstellung von Statoren, in welcher einer von mehreren, bisher voneinander getrennt durchgeführten Arbeitsschritten erledigt wird.

Aus der US 4,106,189 geht eine hydraulisch gesteuerte Spulen-Form-Vorrichtung hervor. Mittels dieser ebenfalls einen für sich getrennt ablaufenden Bearbeitungsvorgang ausführenden Vorrichtung werden in Stator-Blechpakete eingezogene Spulen geformt, so daß z.B. anschließend wiederum weitere Spulen in einer davon getrennt zu bedienenden Einziehstation in das Stator-Blech-Paket eingezogen werden können.

Weder aus der US 4,265,012 noch aus der US 4,106,189 sind dabei Anregungen zu entnehmen, die eine weitere Automatisierung bei der Herstellung von Statoren nahe legen.

Aufgabe der Erfindung ist es, ausgehend vom vorbeschriebenen Stand der Technik eine Vorrichtung und ein Verfahren vorzuschlagen, mittels dem die beschriebenen Bearbeitungsschritte mit höherem Automatisierungsgrad durchgeführt werden können.

Diese Aufgabe wird ausgehend von einer Vorrichtung und einem Verfahren der einleitend genannten Art durch die kennzeichnenden Merkmale des Anspruchs 1 erreicht.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung zur Montage von Spulen in Stator-Blechpakete mit einem Einziehwerkzeug, einem Deckel zur Fixierung von Einziehnadeln des Einziehwerkzeugs und einer Halterung für die Fixierung des Stator-Blechpaketes während des Einziehens, dadurch aus, daß
- die Vorrichtung eine zwischen mindestens zwei Stationen zum Be- oder Entladen, zur Übergabe und/oder zur Bearbeitung verfahrbare Hebeeinheit umfaßt
- die Halterung als Hebezange ausgebildet ist, um das Stator-Blechpaket seitlich an einem Umfang zu ergreifen und beweglich an einem Rahmen der Hebeeinheit angebracht ist und
- die Hebeeinheit den Deckel zur Fixierung der Einziehnadeln umfaßt, wobei der Deckel bezüglich der Hebezange beweglich ist.

Die Hebeeinheit wird zudem mit wenigstens einem bezüglich dem Rahmen und/oder der Halterung beweglichen Bearbeitungswerkzeug versehen. Hierdurch wird es möglich, das in der Hebeeinheit fixierte Stator-Blechpaket an eine Bearbeitungsstation heranzubringen und auf der der Bearbeitungsstation gegenüberliegenden Seite ein weiteres, an der Hebeeinheit vorgesehenes Bearbeitungswerkzeug zum Einsatz zu bringen. Hierdurch wird ein automatischer Verfahrensablauf ermöglicht.

Durch die Ausbildung der Hebeeinheit, wie oben angeführt, kann das Statorblechpaket zudem während der genannten Bearbeitungsschritte in der Halterung verbleiben, so daß eine automatische Fertigung ohne Übergabe des Statorblechpakets möglich ist.

Vorteilhafterweise wird das Bearbeitungswerkzeug so ausgebildet, daß es entlang der Mittelachse eines in der Halterung gehaltenen Statorblechpaketes verfahrbar ist. Hierdurch ist eine Bearbeitung am Statorblechpaket von beiden Stirnseiten her möglich, an denen nach dem Einziehen die Spulenenden hervorstehen. Weiterhin kann ein an der Hebeeinheit befestigtes Werkzeug durch das Statorblechpaket mittig hindurch geführt werden und an der gegenüberliegenden Seite zum Einsatz kommen.

So wird in einer besonderen Ausführungsform als Bearbeitungswerkzeug ein Deckel zur Fixierung der Einziehnadeln eines Einziehwerkzeugs vorgesehen. Dieser Deckel läßt sich wie vor beschrieben, durch das Statorblechpaket hindurchführen und vor dem Einziehen der Statorspulen auf die Einziehlamellen eines Einziehwerkzeugs aufstecken. Hierdurch sind wie bislang beim manuellen Aufsetzen eines derartigen Deckels die Einziehnadeln sowohl in radialer Richtung als auch bezüglich ihrer gleichmäßigen Teilung entlang ihres Umfangs fixiert. Anschließend kann durch Verfahren der beweglichen Halterung und/oder des Einziehwerkzeugs das Statorblechpaket auf das Einziehwerkzeug aufgeschoben werden, wobei die Statorspulen in die entsprechenden Nuten eingezogen werden. Die Halterung des Statorblechpakets bringt hierbei die zum Einbringen des Einziehwerkzeugs erforderliche Gegenkraft am Statorblechpaket auf, so daß eine bislang übliche, separate Verklemmung, die sogenannte Statorspannung, entfallen kann.

In einer Weiterbildung der Erfindung wird als Bearbeitungswerkzeug ein Formwerkzeug vorgesehen. Mit einem derartigen Formwerkzeug kann das Statorblechpaket stirnseitig nach dem Einziehen der Statorspulen bearbeitet werden. Vorzugsweise wird hierbei zugleich das Statorblechpaket an eine Formstation herangefahren, die ein Formwerkzeug zum Angriff auf der Einziehseite des Statorblechpakets aufweist. Durch das an der Hebeeinheit angeordnete Formwerkzeug kann somit zugleich die der Einziehseite gegenüberliegende Gegenseite des Statorblechpakets geformt werden.

In einer besonders vorteilhaften Ausführungsform der Erfindung wird die Hebeeinheit mit einer Hebezange als Halterung für das Statorblechpaket ausgestattet. Mit einer Hebezange läßt sich ein Statorblechpaket von zwei Seiten zuverlässig greifen und exakt positioniert halten.

Vorzugsweise wird die Halterung, insbesondere in Form einer Hebezange, in wenigstens einer Raumrichtung schwenkbar ausgebildet. Hierdurch kann die Halterung, z. B. die Hebezange, als Fixierelement für das Statorblechpaket bei weiteren, über die genannten Bearbeitungsstufen hinausgehenden Bearbeitungsschritten verwendet werden. Derartige Bearbeitungsschritte können manuell oder ebenfalls automatisiert vorgesehen sein. Das Statorblechpaket läßt sich in der Hebeeinheit in die jeweils für die Bearbeitung günstigste Position schwenken.

In einer besonderen Ausführungsform der Erfindung wird die Hebeeinheit zwischen einer Beladestation, einer Einziehstation und/oder Formstation verfahrbar ausgebildet. Hierdurch ermöglicht sich in der oben angeführten Weise die automatische Aufnahme des Statorblechpakets mit anschließendem Einziehen der Statorspulen und anschließender Formung der Spulenenden ohne Übergabe des Statorblechpakets an den jeweiligen Bearbeitungsstationen.

In einer Weiterbildung der Erfindung wird wenigstens eine zusätzliche Hebeeinheit mit einem weiteren Bearbeitungswerkzeug vorgesehen. Mittels einer weiteren Hebeeinheit können weitere Bearbeitungswerkzeuge, die aus konstruktiven Gründen an der ersten Hebeeinheit nicht mehr untergebracht werden können, auf die gleiche Weise wie die vorbeschriebenen, an der ersten Hebeeinheit vorgesehenen Bearbeitungswerkzeuge zum Einsatz gebracht werden. Hierzu muß das Statorblechpaket von der ersten Hebeeinheit zur nächsten Hebeeinheit übergeben werden, wozu vorzugsweise eine Übergabestation eingerichtet wird. In dieser Übergabestation kann das Statorblechpaket in definierter Lage abgelegt und von der nächsten Hebeeinheit dementsprechend problemlos wieder aufgenommen werden.

So ist es beispielsweise möglich, an der ersten Hebeeinheit den Deckel zur Fixierung der Einziehnadeln des Einziehwerkzeugs sowie ein Zwischenformelement anzubringen und an der zweiten Hebeeinheit ein Formwerkzeug zur Endformung vorzusehen.

Eine derartige Zwischenformung kann erforderlich werden, wenn verschiedene Spulen oder Spulengruppen in aufeinanderfolgenden Einziehvorgängen in das Statorblechpaket eingezogen werden sollen. Die Spulenenden müssen dann in einer Zwischenformung so geformt werden, daß das Einziehen der nächsten Spule bzw. Spulengruppe ohne Störung durch die bereits eingezogenen Spulen bzw. Spulengruppen stattfinden kann.

Eine Hebeeinheit wie vorbeschrieben kann beispielsweise so ausgebildet sein, daß die Verfahrwege sowohl des in der Halterung, insbesondere der Hebezange, fixierten Statorblechpakets als auch die der genannten Bearbeitungswerkzeuge im Wesentlichen in vertikaler Richtung laufen. Die genannten Bearbeitungsstationen, z. B. die Formstation bzw. die Einziehstation, werden dabei so angeordnet, daß die Bearbeitung des Statorblechpakets nach dem Absenken zu dem jeweiligen Werkzeug, beispielsweise zu einem Einziehwerkzeug oder zu einem unteren Formwerkzeug, stattfindet.

Als Antrieb für die Bewegung der Halterung in der Hebeeinheit sowie eines Bearbeitungswerkzeugs können pneumatische oder hydraulische Zylinder, elektrische Spindelantriebe oder sonstige im Maschinenbau übliche Antriebssysteme Verwendung finden.

Ein Ausführungsbeispiel der Erfindung ist in der Zeichnung dargestellt und wird anhand der Figuren nachfolgend näher erläutert.

Im einzelnen zeigen
- Fig. 1: eine schematische Darstellung einer Hebeeinheit an einer Einziehstation,
- Fig. 2: eine schematische Darstellung einer Hebeeinheit an einer Zwischenformstation,
- Fig. 3: eine schematische Darstellung einer weiteren Hebeeinheit an einer Endformstation und
- Fig. 4: eine schematische Darstellung einer Fertigungsstraße zum voll- oder halbautomatischen Einziehen und Formen von Statorspulen in Statorblechpakete.

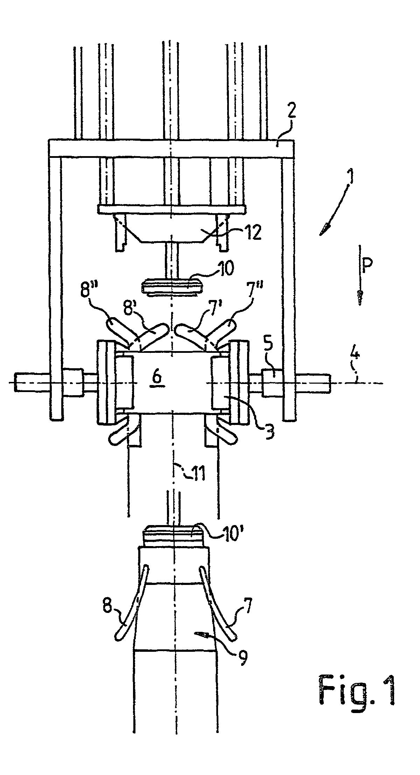

In der Darstellung gemäß Fig. 1 ist eine Hebeeinheit 1 mit einem Rahmen 2 gezeichnet, der in nicht näher dargestellter Weise verfahrbar ist. Am Rahmen 2 ist eine Hebezange 3 um eine im Wesentlichen horizontale Schwenkachse 4 schwenkbar gelagert. Die Hebezange kann in paralleler Richtung zur Schwenkachse 4, beispielsweise durch Zylindereinheiten, geöffnet bzw. geschlossen werden.

Ein Statorblechpaket 6 ist in der Hebezange 3 fixiert. Zwei Statorspulen 7, 8 befinden sich eingelegt in nicht näher dargestellten Einziehlamellen eines Einziehwerkzeugs 9 unterhalb des Statorblechpakets 6. Ein Deckel 10 ist am Rahmen 2 der Hebeeinheit 1 entlang der Achse 11 des in die Hebezange 3 eingespannten Statorblechpakets 6 beweglich angebracht. Er kann somit in Richtung des Pfeils P durch das Statorblechpaket 6 hindurch nach unten auf das Einziehwerkzeug 9 aufgesetzt werden. Die aufgesetzte Position ist mit der Bezugsziffer 10' gekennzeichnet. In dieser Position des Deckels 10 sind die Einziehnadeln des Einziehwerkzeugs 9 in radialer Richtung sowie bezüglich ihrer gleichmäßigen Teilung entlang dem Umfang fixiert.

Die Hebeeinheit 1 ist ebenfalls in Richtung des Pfeils P absenkbar, so daß das Statorblechpaket 6 auf das Einziehwerkzeug 9 aufgesetzt werden kann. Anschließend werden die Statorspulen 7, 8 in die nicht näher dargestellten Nuten des Statorblechpakets 6 eingezogen, wobei z. B. das Einziehwerkzeug 9 in bekannter Weise von unten in das Statorblechpaket eingedrückt wird. Die Hebezange 3 erzeugt in diesem Fall die notwendige Gegenkraft, so daß eine sogenannte separate Statorspannung entfallen kann.

Während des Einziehens der Spulen wird zugleich der auf das Einziehwerkzeug 9 aufgesetzte Deckel durch das Statorblechpaket 6 zurück auf die Oberseite, d. h. die Gegenseite des Statorblechpakets gebracht.

Nach dem Zurückziehen des Deckels 10 sowie dem Anheben der Hebeeinheit 1 befinden sich die Statorspulen 7, 8 in der nicht geformten Position, wie mit 7' bzw. 8' dargestellt.

Ein oberes Zwischenformwerkzeug 12 von einer im wesentlichen kegeligen Form dient dazu, die Statorspulen 7, 8 in die zwischengeformte Stellung 7'', 8'' zu bringen. Hierzu wird, wie weiter unten näher erläutert, die Hebeeinheit 1 über eine Zwischenformstation gefahren und das Statorblechpaket 6 auf einen Zwischenformdorn 13 aufgesteckt. Dabei werden die oberen Enden, die gemäß der ungeformten Stellung 7', 8' in Richtung der Achse 11 geneigt sind, so weit nach außen gedrückt, daß das Zwischenformwerkzeug 12 von oben her angreifen kann und die gewünschte Zwischenform 7'', 8'' herbeiführt.

Der Sinn der nach außen gebogenen Spulenenden 7'', 8'' in der Zwischenformung wird anhand von Fig .1 unmittelbar klar, da in einem nächsten Einziehschritt weitere Spulen bzw. Spulengruppen von unten her in das Statorblechpaket eingezogen werden müssen, wozu das Statorblechpaket erneut auf das Einzeihwerkzeug 9 aufgesetzt werden muß. Auch der Deckel 10 muß dabei erneut von oben durch das Statorblechpaket 6 geführt werden. Durch das Zwischenformen der beiden stirnseitigen Wickelköpfe der Statorspulen 7'', 8'' in die nach außen gebogene Form wird der Weg sowohl für den Deckel 10 als auch für das Einziehwerkzeug 9 freigemacht.

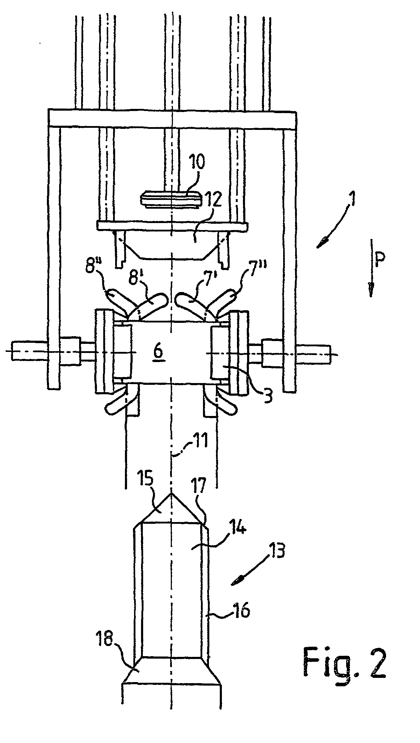

Der Prozeß der Zwischenformung wird insbesondere anhand von Fig. 2 veranschaulicht. Die Hebeeinheit 1 ist hierzu über den unteren Zwischenformdorn 13 gefahren. Der Formdorn 13 weist eine Zylinderfläche 14 mit einer Spitze 15 auf. Radial sind am Zwischenformdorn 13 Lamellen 16 mit einer oberen Formschräge 17 angebracht. Die Lamellen 16 sind so dimensioniert, daß sie in leere, noch nicht mit Statorspulen 7, 8 versehene Nuten des Statorblechpakets 6 eingeführt werden können. Dies geschieht beim Absenken der Hebezange 3 (Pfeil P). Hierbei werden die Spulenenden der nicht vorgeformten Statorspulen 7', 8' über die Spitze 15 sowie die Formschrägen 17 nach außen gedrückt. Die zwischengeformte Form 7'' bzw. 8'' wird anschließend an dem unteren Formkegel 18 sowie durch Absenken des oberen Zwischenformwerkzeugs 12, das einen oberen Formkegel bildet, hergestellt. Die relative Position des oberen Zwischenformwerkzeugs 12 zum Deckel 10 zeigt, daß das Zwischenformwerkzeug 12 ringförmig aufgebaut ist, so daß der Deckel 10 entlang der Achse 11 nicht nur zwischen dem Statorblechpaket 6, sondern auch durch das Zwischenformwerkzeug 12 hindurch verfahrbar ist.

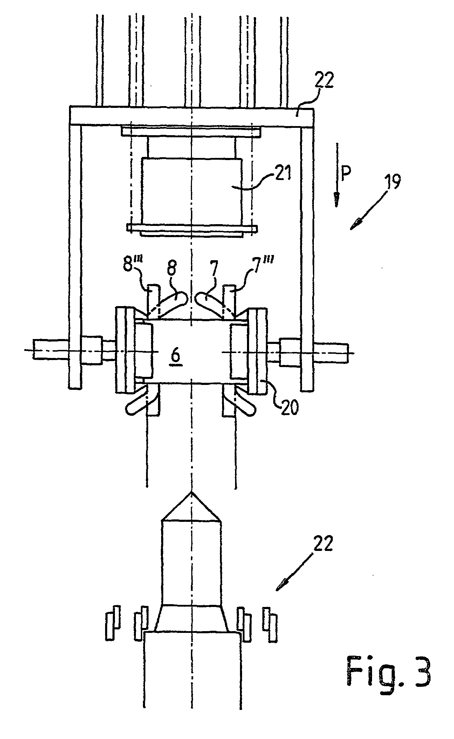

Fig. 3 zeigt das Statorblechpaket 6 in einer weiteren Hebeeinheit 19, an das das Statorblechpaket 6 zwischenzeitlich übergeben wurde. Es befindet sich in einer Hebezange 20, deren Ausbildung und Schwenkbarkeit derjenigen der Hebezange 3 entspricht. In der Hebeeinheit 19 ist als Bearbeitungswerkzeug ein oberes Endformwerkzeug 21 wiederum beweglich am Rahmen 22 der Hebeeinheit 19 angebracht. Die Hebeeinheit 19 ist oberhalb eines unteren Endformwerkzeugs 22 angeordnet. Die Endformung der Spulen 7, 8 in die endgeformte Stellung 7''', 8''' findet durch Absenken des Statorblechpakets 6 auf das Endformwerkzeug 22 und anschließendes Aufdrücken des oberen Endformwerkzeugs 22 statt.

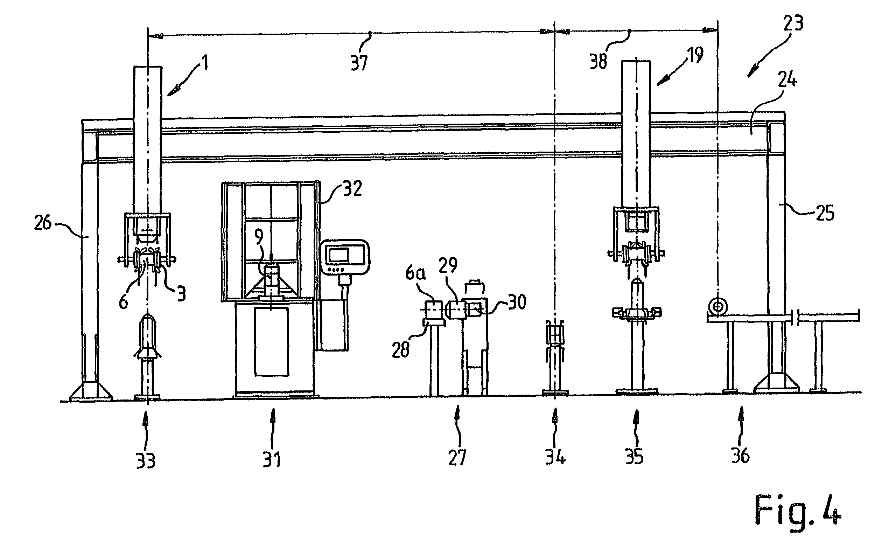

Aus der Darstellung gemäß Fig. 4 ergibt sich der geschilderte Verfahrensablauf im Zusammenhang der vollständigen Fertigungsstraße 23. Zwei Hebeeinheiten 1, 19 sind an einem Portal 24, das über Standbeine 25, 26 am Boden einer Werkshalle befestigt ist, in im Wesentlichen horizontaler Richtung verfahrbar.

Die Hebeeinheit 1 nimmt hierbei in der beschriebenen Weise ein Statorblechpaket 6 an einer Beladestation 27 auf. Hierzu wird das Statorblechpaket zunächst in horizontaler Ausrichtung 6a auf einer Ablage 28 abgelegt. In dieser Ausrichtung ist die Ablage 28 leichter zu handhaben, da das vergleichsweise schwere Statorblechpaket nicht über den Haltedorn 29 gehoben werden muß. Der Haltedorn 29 wird anschließend maschinell in das Statorblechpaket 6a eingeführt und um die Schwenkachse 30 verschwenkt, so daß die Hebeeinheit 1 das Statorblechpaket 6 in der vorbeschriebenen im Wesentlichen vertikalen Ausrichtung mit seiner Hebezange 3 aufnehmen kann.

In der Folge wird die Hebeeinheit 1 zu einer Einziehstation 31 verfahren. Die Einziehstation 31 beinhaltet zugleich eine nicht näher dargestellte Wickeleinheit zum Wickeln und Ablegen der Statorspulen 7, 8 in dem Einziehwerkzeug 9. Ein Schutzgehäuse 32, das während dieses Wickelvorgangs um das Einziehwerkzeug 9 herum angeordnet ist, deutet diesen Umstand an. Zum Einziehen der Statorspulen 7, 8 wird das Schutzgehäuse 32 vom Einziehwerkzeug 9 entfernt. Das Einziehen vollzieht sich sodann in der anhand von Fig. 1 beschriebenen Weise.

Nach dem Einzug der Statorspulen 7, 8 in der Einziehstation 31 wird die Hebeeinheit 1 weiter verfahren, bis sie sich in der in Fig. 4 eingezeichneten Position oberhalb der Zwischenformstation 33 befindet. Die Zwischenformung, die anschließend stattfindet, vollzieht sich in der anhand von Fig. 2 beschriebenen Weise.

Nunmehr können weitere Spulen oder Spulengruppen in der Einziehstation 31 eingezogen und bei Bedarf in der Zwischenformstation 33 zwischengeformt werden. Beim Abschluß aller Einziehvorgänge wird das Statorblechpaket 6 an der Übergabestation 34 in definierter Position abgelegt. Hier wird es von der Hebeeinheit 19, die wie oben angeführt, ebenfalls über eine Hebezange 3 verfügt, aufgenommen und zur Endformstation 35 gebracht. Dort wird in der anhand von Fig. 3 beschriebenen Weise die Endformung der Statorspulen vorgenommen. Anschließend wird das Statorblechpaket 6 an einer Entladestation 36 abgelegt.

Die Verfahrwege 37, 38 der beiden Hebezangen 1, 19 sind im beschriebenen Ausführungsbeispiel somit gerade so eingerichtet, daß keine Kollision stattfinden kann. Sie erlauben, daß beide Hebeeinheiten 1, 19 gerade bis zur Übergabestation 34 gefahren werden können.

An einer Fertigungsstraße 23 wie vorbeschrieben ist eine je nach Wunsch halb- oder vollautomatische Montage von Statorspulen 7, 8 in Statorblechpakete 6 möglich. Wesentlich für diese Automatisierung der Fertigung ist die Ausgestaltung der Hebeeinheiten 1, 19, in denen während der Fixierung der Statorblechpakete 6 anhand in die Hebeeinheiten 1, 19 integrierter, verschiebbarer Bearbeitungswerkzeuge 10, 12, 21 eine Bearbeitung der Statorblechpakete 6 von der Gegenseite, d. h. in dem Ausführungsbeispiel von oben her möglich ist, während oder nachdem die Statorblechpakete 6 durch Absenken der Hebeeinheiten 1, 19 auf untere Bearbeitungswerkzeuge 9, 13, 22 abgesenkt werden.

### Bezugszeichenliste:

- 1: Hebeeinheit
- 2: Rahmen
- 3: Hebezange
- 4: Schwenkachse
- 5: Zylindereinheit
- 6: Statorblechpaket
- 7: Statorspule
- 8: Statorspule
- 9: Einziehwerkzeug
- 10: Deckel
- 11: Achse
- 12: Zwischenformwerkzeug
- 13: Zwischenformdorn
- 14: Zylinderfläche
- 15: Spitze
- 16: Lamellen
- 17: Formschräge
- 18: Formkegel
- 19: Hebeeinheit
- 20: Hebezange
- 21: Endformwerkzeug
- 22: Endformwerkzeug
- 23: Fertigungsstraße
- 24: Portal
- 25: Standbein
- 26: Standbein
- 27: Beladestation
- 28: Ablage
- 29: Haltedorn
- 30: Schwenkachse
- 31: Einziehstation
- 32: Schutzgehäuse
- 33: Zwischenformstation
- 34: Übergabestation
- 35: Endformstation
- 36: Entladestation
- 37: Verfahrweg
- 38: Verfahrweg

## Patentansprüche

1. Vorrichtung zur Montage von Spulen in Stator-Blechpakete mit einem Einziehwerkzeug (9), einem Deckel (10) zur Fixierung von Einziehnadeln (16) des Einziehwerkzeugs (9) und einer Halterung (3) für die Fixierung des Stator-Blechpaketes während des Einziehens, **dadurch gekennzeichnet, dass**
- die Vorrichtung eine zwischen mindestens zwei Stationen (27, 31, 33, 34, 35, 36) zum Be- oder Entladen, zur Übergabe und/oder zur Bearbeitung verfahrbare Hebeeinheit (1) umfasst
- die Halterung (3) als Hebezange (3) ausgebildet ist, um das Stator-Blechpaket (6) seitlich an einem Umfang zu ergreifen und beweglich an einem Rahmen (2) der Hebeeinheit (1) angebracht ist und
- die Hebeeinheit (1) den Deckel (10) zur Fixierung der Einziehnadeln (16) umfasst, wobei der Deckel (10) bezüglich der Hebezange (3) beweglich ist.

2. Vorrichtung nach Anspruch 1, **dadurch gekennzeichnet, dass** der Deckel (10) entlang der Mittelachse (11) eines in der Hebezange (3) gehaltenen Stator-Blechpaketes (6) verfahrbar ist.

3. Vorrichtung nach einem der vorgenannten Ansprüche 1 oder 2, **dadurch gekennzeichnet, dass** ein Bearbeitungswerkzeug als Formwerkzeug (12) zur Formung der Statorspulen (7, 8) auf der der Einzugsseite gegenüberliegenden Gegenseite des Stator-Blechpaketes (6) vorgesehen ist.

4. Vorrichtung nach einem der vorgenannten Ansprüche 1 bis 3, **dadurch gekennzeichnet, dass** die Halterung (3) bezüglich dem Rahmen (2) der Hebeeinheit (1) schwenkbar ist.

5. Vorrichtung nach einem der vorgenannten Ansprüche 1 bis 4, **dadurch gekennzeichnet, dass** die Hebeeinheit (1) zwischen einer Beladestation (27), einer Einziehstation (31) und/oder einer Formstation (33) verfahrbar ist.

6. Vorrichtung nach einem der vorgenannten Ansprüche 1 bis 5, **dadurch gekennzeichnet, dass** wenigstens eine zusätzliche Hebeeinheit (19) mit wenigstens einem weiteren Bearbeitungswerkzeug vorgesehen ist.

7. Vorrichtung nach einem der vorgenannten Ansprüche1 bis 6 **dadurch gekennzeichnet, dass** die zusätzliche Hebeeinheit (19) ein Endformwerkzeug (21) aufweist und zu einer Endformstation (35) verfahrbar ist.

8. Verfahren zur Montage von Spulen in Stator-Blechpaketen mit einem Einziehwerkzeug (9), einem Deckel (10) zur Fixierung von Einziehnadeln (16) des Einziehwerkzeugs (9) und einer Halterung (3) für die Fixierung eines Stator-Blechpaketes (6) während des Einziehens, **dadurch gekennzeichnet, dass** das Stator-Blechpaket (6) mit einer als Hebezange (3) ausgebildeten Halterung seitlich an seinem Umfang ergriffen wird und das Stator-Blechpaket (6) mittels einer verfahrbaren, die Hebezange (3) umfassenden Hebeeinheit (1) an einer Einziehstation (31) und an einer Formstation (33) bearbeitet wird, ohne das Stator-Blechpaket (6) von der Hebezange (3) an die jeweilige Bearbeitungsstation (31, 33) zu übergeben.

9. Verfahren nach Anspruch 8, **dadurch gekennzeichnet, dass** das Stator-Blechpaket an einer Beladestation (27) von einer Hebeeinheit (1) erfasst, angehoben und zu einer Einziehstation (31) gebracht wird, wobei der Deckel (10) in axialer Richtung durch das Stator-Blechpaket (6) gefahren und auf das Einziehwerkzeug (9) aufgesetzt wird.

10. Verfahren nach Anspruch 8 oder 9, **dadurch gekennzeichnet, dass** durch die Hebezange (3) der Hebeeinheit (1) die Gegenkraft beim Einziehen der Spulen bzw. Spulengruppe durch das Einziehwerkzeug (9) aufgebracht wird.

11. Verfahren nach einem der Ansprüche 9 bis 11, **dadurch gekennzeichnet, dass** das Stator-Blechpaket (6) mit der Hebeeinheit (1) von der Einziehstation (31) zu einer Formstation (33) gefahren wird und die Hebeeinheit (1) durch Verschiebung der Hebezange (3) das Stator-Blechpaket (6) auf ein Formwerkzeug (13) aufschiebt, wobei die Statorspulen (7, 8) mit einem an der Hebeeinheit (1) verschiebbar befestigten Formwerkzeug (12) auf der Gegenseite geformt werden.

12. Verfahren nach einem der Ansprüche 8 bis 11, **dadurch gekennzeichnet, dass** das Stator-Blechpaket (6) an einer Übergabestation (34) an wenigstens eine zusätzliche Hebeeinheit (19) übergeben wird.

13. Verfahren nach einem der Ansprüche 8 bis 12, **dadurch gekennzeichnet, dass** bei der Montage der Spulen eine Zwischen- und eine Endformung der Statorspulen (7, 8) an wenigstens zwei verschiedenen Formstationen (33, 35) stattfindet.

## Claims

1. An apparatus for mounting coils in stator laminated cores having a pull-in tool (9), a cover (10) for fixing pull-in needles (16) of the pull-in tool (9) and a holder (3) for fixing the stator laminated core during the pulling-in operation,
**characterised in that**
- the apparatus comprises a hoisting unit (1) which can be moved between at least two stations (27, 31, 33, 34, 35, 36) for loading and unloading, for transfer and/or for processing,
- the holder (3) is constructed as a gripper (3) to grasp the stator laminated core (6) laterally at its circumference and is mounted moveably on a frame (2) of the hoisting unit (1) and
- the hoisting unit (1) comprises the cover (10) for fixing the pull-in needles, the cover (10) being moveable with respect to the gripper (3).

2. An apparatus according to Claim 1,
**characterised in that** the cover (10) can be moved along the central axis (11) of a stator laminated core (6) held in the gripper (3).

3. An apparatus according to one of the above-mentioned Claims 1 or 2,
**characterised in that** a processing tool is provided as a forming tool (12) to form the stator coils (7, 8) on the opposite side of the stator laminated core (6) opposite the pull-in side.

4. An apparatus according to one of the above-mentioned Claims 1 to 3,
**characterised in that** the holder (3) can be swivelled with respect to the frame (2) of the hoisting unit (1).

5. An apparatus according to one of the above-mentioned Claims 1 to 4,
**characterised in that** the hoisting unit (1) can be moved between a loading station (27), a pull-in station (31) and/or a forming station (33).

6. An apparatus according to one of the above-mentioned Claims 1 to 5,
**characterised in that** at least one additional hoisting unit (19) is provided with at least one further processing tool.

7. An apparatus according to one of the above-mentioned Claims 1 to 6,
**characterised in that** the additional hoisting unit (19) comprises a final forming tool (21) and can be moved to a final forming station (35).

8. A method for mounting coils in stator laminated cores having a pull-in tool (9), a cover (10) for fixing pull-in needles (16) of the pull-in tool (9) and a holder (3) for fixing a stator laminated core (6) during the pulling-in operation,
**characterised in that** the stator laminated core (6) is grasped with a holder constructed as a gripper (3) laterally at its circumference and the stator laminated core (6) is processed by means of a movable hoisting unit (1) comprising the gripper (3) at a pull-in station (31) and at a forming station (33) without transferring the stator laminated core (6) from the gripper (3) to the respective processing station (31, 33).

9. A method according to Claim 8,
**characterised in that** at a loading station (27) the stator laminated core is grasped, raised and moved to a pull-in station (31) by the hoisting unit (1), whereby the cover (10) is moved in the axial direction through the stator laminated core (6) and is placed onto the pull-in tool (9).

10. A method according to Claim 8 or 9,
**characterised in that** the counter-force is applied by the gripper (3) of the hoisting unit (1) when the coils or group of coils is pulled in by the pull-in tool (9).

11. A method according to one of Claims 9 to 11,
**characterised in that** the stator laminated core (6) is moved with the hoisting unit (1) from the pull-in station (31) to a forming station (33) and by the displacement of the gripper (3) the hoisting unit (1) pushes the stator laminated core (6) onto a forming tool (13), whereby the stator coils (7, 8) are formed on the opposite side by a forming tool (12) displaceably fixed to the hoisting unit (1).

12. A method according to one of Claims 8 to 11,
**characterised in that** the stator laminated core (6) is transferred to a transfer station (34) at at least one additional hoisting unit (19).

13. A method according to one of Claims 8 to 12,
**characterised in that** during the mounting of the coils, an intermediate and a final forming of the stator coils (7, 8) takes place at at least two different forming stations (33, 35).

## Revendications

1. Dispositif pour le montage de bobines dans des paquets de tôles de stator, comprenant un outil d'insertion (9), un couvercle (10) destiné à l'immobilisation d'aiguilles d'insertion (16) de l'outil d'insertion (9) et une monture (3) destinée à l'immobilisation du paquet de tôles de stator pendant l'insertion,
**caractérisé en ce que**
- le dispositif comprend une unité élévatrice (1) qui peut être déplacée entre au moins deux stations (27, 31, 33, 34, 35, 36) pour le chargement ou le déchargement pour le transfert et/ou le travail,
- la monture (3) est constituée par une pince élévatrice (3) destinée à saisir le paquet de tôles de stator (6) latéralement au niveau de sa périphérie et elle est disposée de façon mobile sur un châssis (2) de l'unité élévatrice (1), et
- l'unité élévatrice (1) comprend le couvercle (10) destiné à l'immobilisation des aiguilles d'insertion (16), le couvercle (10) étant mobile par rapport à la pince élévatrice (3).

2. Dispositif selon la revendication 1,
**caractérisé en ce que** le couvercle (10) peut se déplacer le long de l'axe médian (11) d'un paquet de tôles de stator (6) qui est tenu dans la pince élévatrice (3).

3. Dispositif selon l'une des revendications 1 ou 2 précitées,
**caractérisé en ce qu'**il est prévu un outil de travail constituant un outil de mise en forme (12) destiné à la mise en forme des bobines de stator (7, 8) sur le côté opposé du paquet de tôles de stator (6) qui est à l'opposé du côté d'insertion.

4. Dispositif selon l'une des revendications 1 à 3 précitées,
**caractérisé en ce que** la monture (3) peut pivoter par rapport au châssis (2) de l'unité élévatrice (1).

5. Dispositif selon l'une des revendications 1 à 4 précitées,
**caractérisé en ce que** l'unité élévatrice (1) peut se déplacer entre une station de chargement (27), une station d'insertion (31) et/ou une station de mise en forme (33).

6. Dispositif selon l'une des revendications 1 à 5 précitées,
**caractérisé en ce qu'**il est prévu au moins une unité élévatrice (19) supplémentaire comportant au moins un autre outil de travail.

7. Dispositif selon l'une des revendications 1 à 6 précitées,
**caractérisé en ce** l'unité élévatrice (19) supplémentaire présente un outil de mise en forme finale (21) et peut être amenée à une station de mise en forme finale (35).

8. Procédé pour le montage de bobines dans des paquets de tôles de stator avec un outil d'insertion (9), un couvercle (10) destiné à l'immobilisation d'aiguilles d'insertion (16) de l'outil d'insertion (9) et une monture (3) destinée à l'immobilisation d'un paquet de tôles de stator (6) pendant l'insertion,
**caractérisé en ce que** le paquet de tôles de stator (6) est saisi latéralement au niveau de sa périphérie au moyen d'une monture constituée par une pince élévatrice (3) et **en ce que** le paquet de tôles de stator (6) est travaillé au moyen d'une unité élévatrice (1) pouvant se déplacer et comprenant la pince élévatrice (3), dans une station d'insertion (31) et une station de mise en forme (33) sans transférer le paquet de tôles de stator (6) de la pince élévatrice (3) à la station de travail (31, 33) concernée.

9. Procédé selon la revendication 8,
**caractérisé en ce que** le paquet de tôles de stator est saisi par une unité élévatrice (1) dans une station de chargement (27), élevé et amené à une station d'insertion (31), le couvercle (10) étant transporté dans une direction axiale à travers le paquet de tôles de stator (6) et appliqué sur l'outil d'insertion (9).

10. Procédé selon la revendication 8 ou 9,
**caractérisé en ce que** la force antagoniste exercée lors de l'insertion des bobines ou du groupe de bobines à travers l'outil d'insertion (9) est développée par la pince élévatrice (3) de l'unité élévatrice (1).

11. Procédé selon l'une des revendications 9 à 11,
**caractérisé en ce que** le paquet de tôles de stator (6), avec l'unité élévatrice (1), est transporté de la station d'insertion (31) à une station de mise en forme (33), et l'unité élévatrice (1) emboîte le paquet de tôles de stator (6) sur un outil de mise en forme (13) par une translation de la pince élévatrice (3), les bobines de stator (7, 8) étant mises en forme sur le côté opposé, au moyen d'un outil de mise en forme (12) fixé de façon mobile en translation à l'unité élévatrice (1).

12. Procédé selon l'une des revendications 8 à 11,
**caractérisé en ce que**, dans une station de transfert (34), le paquet de tôles de stator (6) est transféré à au moins une unité élévatrice (19) supplémentaire.

13. Procédé selon l'une des revendications 8 à 12,
**caractérisé en ce que**, lors du montage des bobines, il se produit une mise en forme intermédiaire et une mise en forme finale des bobines de stator (7, 8) dans au moins deux stations de mise en forme (33, 35) différentes.
